# EUROPÄISCHE PATENTSCHRIFT

(11) **EP 1 637 452 B1**
(45) Veröffentlichungstag und Bekanntmachung des Hinweises auf die Patenterteilung: **16.04.2008**
(21) Anmeldenummer: 05019864.7
(22) Anmeldetag: 13.09.2005
(51) Int. Cl.: B64D 41/00

(54) **Brennstoffzellen-System als primäre elektrische Energieversorgung für Luftfahrzeuge**
Fuel cell system as primary electrical energy source for aircraft
Système de pile à combustible comme source primaire d'énergie électrique pour aéronefs

(30) Priorität: 15.09.2004 DE 102004044646; 15.09.2004 US 609968 P
(43) Veröffentlichungstag der Anmeldung: 22.03.2006
(73) Patentinhaber: Airbus Deutschland GmbH, 21129 Hamburg (DE)
(72) Erfinder: Gans, Hubert, 22763 Hamburg (DE)
(74) Vertreter: Maiwald Patentanwalts GmbH

(56) Entgegenhaltungen:
- WALKER, JAMES F.; CIVINSKAS, KESTUTIS C.: "Emerging Fuel Cell Technology Being Developed-- Offers Many Benefits to Air Vehicles"[Online] 10. August 2004 (2004-08-10), XP002360349 NASA Glenn Research Center Research/Technology Report Gefunden im Internet: URL:http://www.grc.nasa.gov/WWW/RT/2003/20 00/2600walker.html> [gefunden am 2005-12-20]
- LIANG, ANITA: "Emerging Fuel Cell Developments at NASA for Aircraft Applications"[Online] 19. Juni 2004 (2004-06-19), XP002360350 NASA Glenn Research Center Presentation Gefunden im Internet: URL:http://www.netl.doe.gov/publications/p roceedings/03/seca/Anita Liang.pdf> [gefunden am 2005-12-20]
- ELBULUK M E ET AL: "POTENTIAL STARTER/GENERATOR TECHNOLOGIES FOR FUTURE AEROSPACE APPLICATIONS" PROCEEDINGS OF THE IEEE 1996 NATIONAL AEROSPACE AND ELECTRONICS CONFERENCE (NAECON). DAYTON, MAY 20 - 23, 1996, PROCEEDINGS OF THE IEEE NATIONAL AEROSPACE AND ELECTRONICS CONFERENCE (NAECON), NEW YORK, IEEE, US, Bd. VOL. 1, 20. Mai 1996 (1996-05-20), Seiten 75-82, XP000868743 ISBN: 0-7803-3307-1
- WEIMER J A ED - INSTITUTE OF ELECTRICAL AND ELECTRONICS ENGINEERS: "ELECTRIAL POWER TECHNOLOGY FOR THE MORE ELECTRIC AIRCRAFT" PROCEEDINGS OF THE AIAA/IEEE DIGITAL AVIONICS SYSTEMS CONFERENCE. NEW YORK, OCT. 25 - 28, 1993, NEW YORK, IEEE, US, Bd. CONF. 12, 25. Oktober 1993 (1993-10-25), Seiten 445-450, XP000451697

## Beschreibung

Die vorliegende Erfindung betrifft die Energieversorgung für Flugzeuge. Insbesondere betrifft die vorliegende Erfindung ein Energieversorgungssystem an Bord eines Luftfahrzeugs, ein Luftfahrzeug umfassend ein entsprechendes Energieversorgungssystem, und die Verwendung eines entsprechenden Energieversorgungssystems in einem Luftfahrzeug.

In modernen Luftfahrzeugen werden verschiedene Arten der Übertragung von Energie für die Versorgung der Flugzeugsysteme verwendet. Neben elektrischer Energie liefern die Haupttriebwerke auch pneumatische sowie hydraulische Energie mittels der entsprechenden Medien an das Flugzeug. Die Hilfsturbine liefert in der Regel pneumatische und elektrische Energie für den Start der Triebwerke und den Betrieb des Flugzeuges am Boden und im Notfall.

Die Hydraulik- und Zapfluftsysteme, die über weite Strecken durch das Flugzeug geführt werden, weisen eine ganze Reihe von Nachteilen auf. Bei Zapfluftsystemen ist ein hoher konstruktiver Aufwand erforderlich, z.B. für die Betätigung der pneumatischen Ventile und für Zwischenkühler. Der Wartungsaufwand am Triebwerk und im Flugzeug ist dabei hoch. Die Kabinenklimatisierungssysteme, die mit Zapfluft betrieben werden, haben einen geringen Wirkungsgrad. Die hydraulischen Systeme der Luftfahrzeuge erfordern einen beträchtlichen Wartungsaufwand.

Die Energie, welche für den Betrieb von (zukünftigen) voll-elektrischen Bordsysteme notwendig ist, kann durch mehrere vom Triebwerk angetriebene Generatoren bereitgestellt werden. Diese zusätzlichen Generatoren führen jedoch in der Regel dazu, dass der Geräteträger entsprechend stark mechanisch belastet wird. Alternativ zur Installation an einen Geräteträger können die Triebwerksgeneratoren an die Triebswerkswellen direkt angekoppelt werden. Allerdings führen beide Konzepte zu einem schweren, wenig effizienten, schlecht regelbaren sowie wartungsunfreundlichen Triebwerk.

Walker, James F.; Civinskas, Kestutis C.: "Emerging Fuel Cell Technology Being Developed - Offers Many Benefits To Air Vehicels" vom 10. August 2004 betrifft Brennstoffzellensysteme für Flugzeuge.

Liang, Anita: "Emerging Fuel Cell Developments at NASA For Aircraft Applications" vom 19. Juni 2004 D2 betrifft die Verwendung von Brennstoffzellen in Flugzeugen.

Elbuluk M. E. et al.: "Potential Starter/Generator Technologies For Future Aerospace Applications" vom 20. Mai 1996 offenbart eine Starter/Generator-Technologie zur Versorgung des Flugzeugs mit elektrischer Energie.

Weimer J. A.: "Electrical Power Technology For The More Electric Aircraft" vom 25. Oktober 1993 offenbart eine Technologie für die elektrische Versorgung eines "More Electric Aircraft".

Es ist eine Aufgabe der vorliegenden Erfindung, eine verbesserte Energieerzeugung an Bord von Luftfahrzeugen anzugeben.

Die obige Aufgabe wird mittels eines Energieversorgungssystems an Bord eines Luftfahrzeuges mit den Merkmalen des Anspruchs 1 gelöst.

Indem in das bordinterne Energieversorgungssystem Brennstoffzellen integriert werden, ist es beispielsweise möglich, den Wirkungsgrad der bordinternen Energieerzeugung zu erhöhen und somit letztendlich den Kraftstoffverbrauch während des Fluges zu vermindern. Die Brennstoffzellen können Hochspannungs-Gleichstromsysteme direkt mit Gleichstrom versorgen. Das Brennstoffzellensystem weist eine geringere Schadstoffemission auf als eine vergleichsweise Hilfsgasturbine und erzeugt dabei deutlich weniger Lärm.

Weiterhin kann sich dadurch der Wartungsaufwand der Haupttriebwerke vermindern. Ebenso kann sich dadurch das Gewicht der Haupttriebwerke vermindern. Aufgrund der fehlenden Haupttriebswerksgeneratoren kann der Wirkungsgrad und das Nebenstromverhältnis des Triebwerks erhöht werden.

Erfindungsgemäß umfasst das Energieversorgungssystem weiterhin eine Regeleinheit, wobei die Regeleinheit über eine erste Signalstrecke mit der elektrischen Energieverteilungseinrichtung verbunden ist und wobei die Regeleinheit zur Steuerung oder Regelung der elektrischen Energieverteilungseinrichtung über die erste Signalstrecke ausgeführt ist.

Vorteilhafterweise ist somit eine individuelle Regelung oder Steuerung der Energieversorgung für die jeweiligen elektrischen Verbraucher, welche mit der elektrischen Energieversorgungseinrichtung verbunden sind, möglich, so dass ein zentrales Energiemanagement durchführbar ist.

Erfindungsgemäß ist die elektrische Energieverteilungseinrichtung zur Übertragung von Signalen an die Regeleinheit ausgeführt, wobei die Regeleinheit über eine zweite Signalstrecke mit dem zumindest einen Brennstoffzellen-Modul verbunden ist und wobei die Regeleinheit über die zweite Signalstrecke das zumindest eine Brennstoffzellen-Modul steuert oder regelt.

Vorteilhafterweise wird damit ein bordinternes Energieversorgungssystem angegeben, welches eine Energieverteilungseinrichtung aufweist, die mit der entsprechenden Regeleinheit Rücksprache halten kann. Beispielsweise kann es sich bei den hierbei übertragenen Signalen um Informationen bezüglich einem zukünftigen Energiebedarf eines bestimmten Verbrauchers handeln. Als Reaktion darauf kann die Regeleinheit beispielsweise über die zweite Signalstrecke das zumindest eine Brennstoffzellen-Modul weiter hochfahren oder auch entsprechend drosseln.

Gemäß einem Ausführungsbeispiel der vorliegenden Erfindung weist die Regeleinheit ein Priorisierungsmittel auf, wobei das Priorisierungsmittel zur Aufstellung einer Rangliste der elektrischen Verbraucher ausgeführt ist. Die Regeleinheit ist hierbei zur Steuerung oder Regelung der elektrischen Energieverteilungseinrichtung über die erste Signalstrecke derart ausgeführt, dass die bereitstehende Energie an die elektrischen Verbraucher entsprechend der Rangliste der elektrischen Verbraucher verteilbar ist.

Somit ist eine Optimierung des Energiemanagements möglich, derart, dass Verbraucher mit hoher Priorität in jedem Fall mit ausreichender elektrischer Energie versorgt werden, während im Falle eines Versorgungsengpasses lediglich weniger wichtige Verbraucher, also Verbraucher, die weiter unten in der Rangliste stehen, evtl. mit einer unzureichenden Energiemenge versorgt werden. Hierdurch ist auch im Falle einer zeitweisen Energieunterversorgung des Gesamtnetzes immer noch eine ausreichende Energieversorgung der priorisierten Verbraucher gewährleistet.

Gemäß einem weiteren Ausführungsbeispiel der vorliegenden Erfindung umfasst das Energieversorgungssystem weiterhin einen Starter-Generator, wobei der Starter-Generator zur Erzeugung von Energie ausgeführt ist und wobei der Starter-Generator zur zumindest teilweisen Abgabe seiner erzeugten Energie an die elektrische Energieverteilungseinrichtung ausgeführt ist.

Vorteilhafterweise wird der Energieverteilungseinrichtung somit auch dann elektrische Energie geliefert, wenn keine der Brennstoffzellen-Module in Betrieb sind. Weiterhin können Spitzen im Energiebedarf, welche von den Brennstoffzellen-Modulen nicht abgedeckt werden können, durch die Starter-Generatorenenergie abgedeckt werden.

Gemäß einem weiteren Ausführungsbeispiel der vorliegenden Erfindung ist der Starter-Generator auf einer Welle eines Kerntriebwerks integriert, so dass ein Geräteträger nicht erforderlich ist.

Vorteilhafterweise werden hierdurch die Anforderungen an die Statik der Primärstruktur des Flugzeugs reduziert. Weiterhin kann durch Einsparung des Geräteträgers das Gesamtgewicht des Flugzeuges maßgeblich reduziert werden.

Gemäß einem weiteren Ausführungsbeispiel der vorliegenden Erfindung sind die elektrischen Verbraucher ausgewählt aus der Gruppe umfassend elektrische Kabinenklimatisierung, elektrische Flügelenteisung und elektrische Gondelenteisung.

Weitere Ausführungsbeispiele der vorliegenden Erfindung ergeben sich aus den weiteren Ansprüchen.

Im folgenden wird die Erfindung anhand von Ausführungsbeispielen unter Bezugnahme auf die Figuren näher beschrieben.

In der folgenden Figurenbeschreibung werden für die gleichen oder ähnlichen Elemente die gleichen Bezugsziffern verwendet.

Fig. 1 zeigt eine elektrische Energieversorgung für Luftfahrzeuge mit von den Triebwerken angetriebenen Generatoren.

Fig. 2 zeigt ein Brennstoffzellen-System als primäre elektrische Energieversorgung für Luftfahrzeuge gemäß einem Ausführungsbeispiel der vorliegenden Erfindung.

Fig. 3 zeigt den Einbau eines Brennstoffzellen-Systems in ein Luftfahrzeug mit vollelektrischen Bordsystemen gemäß einem Ausführungsbeispiel der vorliegenden Erfindung.

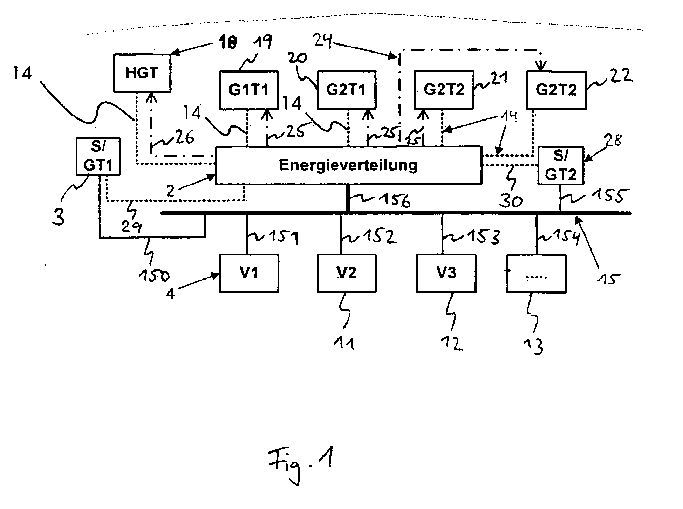

Fig. 1 zeigt eine schematische Darstellung einer elektrischen Energieversorgung für Luftfahrzeuge mit Generatoren, welche von den Triebwerken angetrieben werden. Die Energieversorgung besteht hierbei maßgeblich aus einem elektrischen Bordnetz 15, einer Energieverteilung 2 und elektrischen Generatoren des Triebwerks 19 - 22. Die elektrischen Generatoren 19 - 22 werden hierbei über das Triebwerk angetrieben und erzeugen elektrische Energie, welche sie über Versorgungsleitungen 14 an die Energieverteilungseinrichtung 2 abgeben. Bei den Triebwerksgeneratoren 19 und 20 handelt es sich um den ersten und den zweiten Triebwerksgenerator des ersten Triebwerks. Bei den Triebwerksgeneratoren 21, 22 handelt es sich um den ersten und zweiten Generator des zweiten Triebwerks (die Triebwerke sind in Fig. 1 nicht dargestellt). Weiterhin ist eine Hilfsgasturbine 18 über Versorgungsleitung 27 an die Energieverteilung 2 angeschlossen. Die vier Triebwerksgeneratoren 19 - 22 und die Hilfsgasturbine 18 sind über entsprechende Signalstrecken 25, 26, 24 mit der Energieverteilungseinrichtung 2 verbunden und können somit von der Energieverteilungseinrichtung 2 angesteuert werden.

Weiterhin weist das Energieversorgungssystem einen ersten Starter-Generator 3 und einen zweiten Starter-Generator 28 auf, welche über Verbraucheranschlüsse 150, 155 mit dem elektrischen Bordnetz 15 verbunden sind. Beide Starter-Generatoren 3, 28 können über Versorgungsleitungen 29, 30 Energie an die Energieverteilung 2 abgeben.

Weiterhin sind elektrische Verbraucher 4, 11, 12, 13 über Verbraucheranschlüsse 151, 152, 153, 154 an das Bordnetz 15 angeschlossen. Das Bordnetz wird hierbei über die Energieverteilung 2 und den entsprechenden Anschluss 156 mit Energie versorgt.

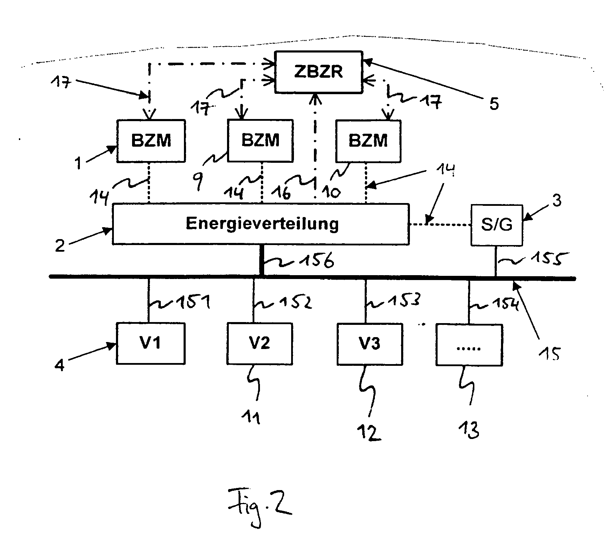

Fig. 2 zeigt ein Energieversorgungssystem mit einem Brennstoffzellen-System als primäre elektrische Energieversorgung für Luftfahrzeuge in Form einer schematischen Darstellung gemäß einem Ausführungsbeispiel der vorliegenden Erfindung. Das Energieversorgungssystem umfasst hierbei im wesentlichen ein elektrisches Bordnetz 15, eine elektrische Energieverteilungseinrichtung 2 und eine Brennstoffzellen-Anordnung 1, 9, 10. Weiterhin umfasst das Energieversorgungssystem eine zentrale Brennstoffzellen-Regelung 5.

Die zentrale Brennstoffzellen-Regelung 5 ist hierbei über zweite Signalstrecken 17 mit den einzelnen Brennstoffzellen-Modulen 1, 9, 10 verbunden und kann somit die Brennstoffzellen-Module 1,9,10 einzeln ansteuern bzw. regeln.

Weiterhin ist die Regelungseinheit 5 über eine erste Signalstrecke 16 mit der elektrischen Energieverteilungseinrichtung 2 verbunden, so dass die Steuereinheit 5 die Energieverteilungseinheit 2 entsprechend ansteuern oder regeln kann. Weiterhin kann ein Informationsaustausch zwischen Energieverteilungseinrichtung 2 und Regeleinheit 5 stattfinden, welcher beispielsweise Informationen bezüglich zukünftig zu erwartendem Energieverbrauch einzelner Verbraucher 4, 11, 12, 13 umfasst. Somit ist es beispielsweise möglich, dass die zentrale Steuereinheit 5 zukünftig zu erwartende Energieverbrauchsspitzen durch entsprechendes Hochregeln einzelner Brennstoffzellen-Module 1, 9, 10 entgegentritt bzw. bei zukünftigem zu erwartenden geringem Energieverbrauch die Leistung der Brennstoffzellen-Module 1, 9, 10 entsprechend herunterregelt. Somit ist die Energieversorgung an Bord des Luftfahrzeuges mit hoher Wahrscheinlichkeit gewährleistet. Bei geringem Energieverbrauch kann die Leistung der Brennstoffzellen-Module 1, 9, 10 entsprechend heruntergeregelt werden, was zu einer effektiven Rohstoffeinsparung führt.

Natürlich ist es hinsichtlich der Versorgungssicherheit an Bord des Luftfahrzeuges möglich, einzelne Bauteile redundant auszuführen. So können beispielsweise mehrere zentrale Versorgungseinheiten 5 vorgesehen sein, welche beispielsweise an verschiedenen Orten des Flugzeuges untergebracht sind, so dass die Möglichkeit eines Systemsausfalls minimiert wird.

Weiterhin ist es möglich, ein Überangebot an einzelnen Brennstoffzellen-Modulen 1, 9, 10 bereitzustellen, so dass auch überhöhter Energieverbrauch stets befriedigt werden kann, selbst wenn einzelne Brennstoffzellen-Module ausfallen sollten.

Weiterhin umfasst das Energieversorgungssystem einen Starter-Generator 3, welcher über Verbraucheranschluss 155 an das Bordnetz 15 angeschlossen ist. Weiterhin ist der Starter-Generator 3 über elektrische Versorgungsleitung 14 an die Energieverteilung 2 angeschlossen. Somit ist es möglich, dass der Starter-Generator 3 einerseits Energie an die Energieverteilung 2 bereitstellt, falls beispielsweise unvorhergesehene Energieverbrauchsspitzen nicht alleine von den Brennstoffzellen-Modulen 1, 9, 10 abgedeckt werden können, und andererseits, beispielsweise beim Triebwerksstart, vom elektrischen Bordnetz 15 aus versorgt wird.

Das elektrische Bordnetz 15 wird von der Energieverteilung 2 über Anschluss 156 mit elektrischer Energie beliefert und versorgt über Verbraucheranschlüsse 151-154 die entsprechenden Verbraucher 4, 11, 12, 13. Bei diesen Verbrauchern kann es sich beispielsweise um eine elektrische Kabinenklimatisierung, elektrische Flügelenteisung und elektrische Gondelenteisung handeln. Weiterhin kann ein Triebwerk oder ein Triebwerkssystem des Luftfahrzeugs über die Energieverteilung 2 und das elektrische Bordnetz 15 oder aber auch direkt über einzelne Brennstoffzellen-Module 1, 9, 10 mit Energie versorgt werden (nicht gezeigt in Fig. 2).

Die zentrale Regeleinheit 5 weist weiterhin ein sogenanntes Priorisierungsmittel auf (nicht dargestellt in Fig. 2). Durch diese Priorisierungsmittel kann, beispielsweise in Kommunikation mit der Energieverteilung 2 und den einzelnen Brennstoffzellen-Modulen 1, 9, 10, eine Rangliste der elektrischen Verbraucher 4, 11, 12, 13 aufgestellt werden. Die Rangliste bestimmt hierbei die Priorität, mit der die einzelnen Verbraucher 4, 11, 12, 13 mit Energie versorgt werden sollen. Beispielsweise kann im Fall einer eventuellen Mangelversorgung mit Energie der prioritätsschwächste Verbraucher (beispielsweise ein Filmprojektor zur Unterhaltung der Fluggäste) von der Energieversorgung getrennt werden. Prioritätshöhere Verbraucher hingegen werden entsprechend der Rangliste bevorzugt mit Energie versorgt, so dass hier eine ausreichende Energieversorgung auch in Notfällen sichergestellt ist.

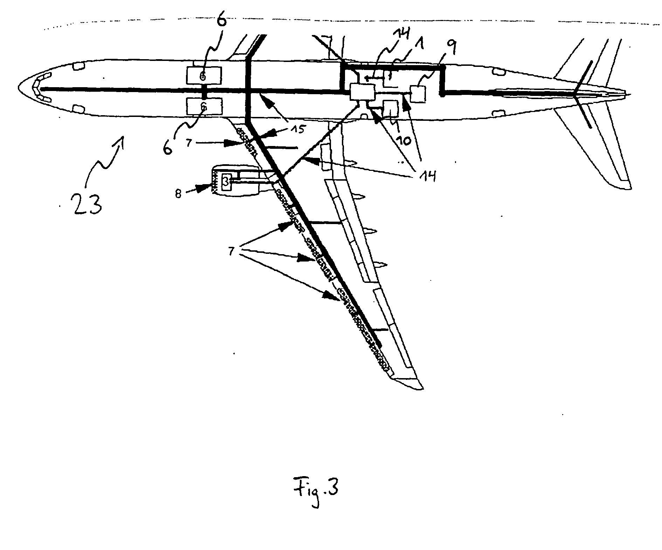

Fig. 3 zeigt eine schematische Darstellung eines Einbaus eines Energieversorgungssystems mit verschiedenen Brennstoffzellen-Modulen als primäre elektrische Energieversorgung in einem Luftfahrzeug mit vollelektrischen Bordsystemen gemäß einem Ausführungsbeispiel der vorliegenden Erfindung. Wie in Fig. 3 zu erkennen, weist das Luftfahrzeug 23 mehrere Brennstoffzellen-Module 1, 9, 10, eine elektrische Energieverteilung 2, ein elektrisches Bordnetz 15 und Versorgungsleitungen 14 für die Energieverteilung 2 auf.

Die elektrischen Flugzeugsysteme, wie beispielsweise die elektrische Kabinenklimatisierung 6, die elektrische Flügelenteisung 7, die elektrische Gondelenteisung 8 und der Starter-Generator 3 des Triebwerks bzw. die einzelnen Triebwerke oder Triebwerksysteme werden primär mit dem erfindungsgemäßen Energieversorgungssystem versorgt. Dem elektrischen Bordnetz 15 wird hierbei Energie über die elektrische Energieverteilung 2 bereitgestellt, welche über Versorgungsleitungen 14 mit den Brennstoffzellen-Modulen 1, 9, 10 verbunden ist.

Die primären Energieerzeuger sind die Brennstoffzellen-Module 1, 9, 10, die zusammen mit der Regeleinheit 5 ein Brennstoffzellen-System ausbilden. Außerdem kann mittels Starter-Generatoren 3 der Triebwerke während der Flugmission zusätzliche elektrische Energie an das elektrische Energieverteilungssystem 2 abgegeben werden. Eine Brennstoffzellen-Regeleinheit 5 empfängt Signale der Energieverteilung 2 und regelt die Brennstoffzellen-Module 1, 9, 10. Die Anzahl und Lage der dargestellten Brennstoffzellen-Module 1, 9, 10, Regler, Bordnetze, Versorgungsleitungen sowie Energieverteiler ist dabei für die Erfindung nicht maßgeblich, sondern kann entsprechend der gewünschten Ausfallsicherheit sowie anderer Kriterien bestimmt werden.

Die Energieverteilung enthält entsprechend eines Ausführungsbeispiels der vorliegenden Erfindung eine Regelung der Energiebereitstellung abhängig von der Bedeutung der einzelnen Energieverbraucher (nicht dargestellt in Fig. 3). Beispiele für elektrische Verbraucher sind Kabinenklimatisierung inkl. Druckhaltung, die Flügel- und Gondelenteisung 7, 8, sowie der Starter-Generator 3. Weitere elektrische Bordsysteme sind wegen der besseren Übersichtlichkeit von Fig. 3 nicht dargestellt.

Bei dem in Fig. 3 dargestellten Flugzeug kann es sich beispielsweise um ein vollelektrisches Luftfahrzeug mit einem Starter-Generator 3 ohne weitere Haupttriebwerksgeneratoren handeln. Der Starter-Generator 3 ist hierbei auf einer Welle des Kerntriebwerks integriert, so dass ein Geräteträger nicht erforderlich ist.

Verschiedene Typen von Brennstoffzellen haben unterschiedliche Wirkungsgrade. Diese sind besser, als der elektrische Wirkungsgrad, der mit Hilfsgasturbinen gemäß dem Stand der Technik erzielt werden kann. Der elektrische Wirkungsgrad der Brennstoffzellen-Module 1, 9, 10 ist in der Regel größer, als der von Triebwerksgeneratoren. Während der Flugmission kann mit der erfindungsgemäßen effizienten Energieerzeugung durch die Brennstoffzellen in Verbindung mit effizienteren elektrischen Bordsystemen der Kraftstoffverbrauch vermindert werden. Das bedeutet, dass die Erfindung es ermöglicht, alle Vorteile von vollelektrischen Bordsystemen (Vereinheitlichung, einfache elektrische Leitungen, hohe Effizienz, Wartbarkeit, Zuverlässigkeit) mit weniger Kraftstoffverbrauch zu verbinden. Brennstoffzellen können Hochspannungs-Gleichstromsysteme direkt mit Gleichstrom versorgen. Das Brennstoffzellen-System weist eine geringere Schadstoffemission auf als eine entsprechende Hilfsgasturbine und erzeugt dabei deutlich weniger Lärm.

Erfindungsgemäß werden die Triebwerke dabei deutlich vereinfacht und können effizienter Schub erzeugen. Die Triebwerke haben deutlich weniger Schnittstellen mit dem Flugzeug. Ihre Regelung wird vereinfacht und muss nicht mehr die energetischen Anforderungen der Flugzeugsysteme mitberücksichtigen. Ein Geräteträger ist nicht mehr erforderlich, wenn der Starter-Generator 3 auf der Welle des Kerntriebwerks integriert wird.

Falls beispielsweise Triebwerke mit magnetischer Wellenlagerung Verwendung finden, kann der damit zusammenhängende erhöhte Energieverbrauch durch das erfindungsgemäße Energieversorgungssystem gedeckt werden.

Durch den Einsatz eines Energieversorgungssystems nach einem Ausführungsbeispiel der vorliegenden Erfindung kann sich der Wartungsaufwand des gesamten Flugzeuges deutlich vermindern.

Die Erfindung beschränkt sich in ihrer Ausführung nicht auf die in den Figuren dargestellten bevorzugten Ausführungsformen. Vielmehr ist eine Vielzahl von Varianten denkbar, welche von der dargestellten Lösung und dem erfindungsgemäßen Prinzip auch bei grundsätzlich anders gearteten Ausführungsformen Gebrauch macht.

Ergänzend sei darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Energieversorgungssystem an Bord eines Luftfahrzeuges, umfassend:
eine Brennstoffzellen-Anordnung;
eine elektrische Energieverteilungseinrichtung (2); und
eine Regeleinheit (5);
wobei die Brennstoffzellen-Anordnung zumindest ein Brennstoffzellen-Modul (1) umfasst;
wobei die Brennstoffzellen-Anordnung zur Bereitstellung von elektrischer Energie an die elektrische Energieverteilungseinrichtung (2) ausgeführt ist;
wobei die elektrische Energieverteilungseinrichtung (2) zur Verteilung der bereitgestellten Energie an elektrische Verbraucher ausgeführt ist;
wobei die Regeleinheit (5) über eine erste Signalstrecke mit der elektrischen Energieverteilungseinrichtung (2) verbunden ist;
wobei die Regeleinheit ferner über eine zweite Signalstrecke mit dem zumindest einem Brennstoffzellen-Modul verbunden ist;
wobei die elektrische Energieverteilungseinrichtung (2) zur Übertragung von Signalen an die Regeleinheit (5) ausgeführt ist;
wobei die Regeleinheit (5) zur Steuerung oder Regelung der elektrischen Energieverteilungseinrichtung (2) über die erste Signalstrecke ausgeführt ist;
wobei die Regeleinheit (5) zur Steuerung oder Regelung des zumindest einen Brennstoffzellen-Moduls (1) über die zweite Signalstrecke aufgeführt ist; und
wobei es sich bei dem Luftfahrzeug um ein Luftfahrzeug mit einem Starter-Generator (3) je Triebwerk ohne weitere Haupttriebwerksgeneratoren handelt.

2. Energieversorgungssystem nach Anspruch 1,
wobei die Regeleinheit (5) ein Priorisierungsmittel aufweist;
wobei das Priorisierungsmittel zur Aufstellung einer Rangliste der elektrischen Verbraucher ausgeführt ist; und
wobei die Regeleinheit (5) zur Steuerung oder Regelung der elektrischen Energieverteilungseinrichtung (2) über die erste Signalstrecke derart ausgeführt ist, dass die bereitstehende Energie an die elektrischen Verbraucher entsprechend der Rangliste der elektrischen Verbraucher verteilbar ist.

3. Energieversorgungssystem nach einem der vorhergehenden Ansprüche,
wobei der Starter-Generator (3) zur Erzeugung von Energie ausgeführt ist; und
wobei der Starter-Generator (3) zur zumindest teilweisen Abgabe seiner erzeugten Energie an die elektrische Energieverteilungseinrichtung (2) ausgeführt ist.

4. Energieversorgungssystem nach einem der vorhergehenden Ansprüche,
wobei der Starter-Generator (3) auf einer Welle eines Kerntriebwerks integriert ist, so dass ein Geräteträger nicht erforderlich ist.

5. Energieversorgungssystem nach einem der vorhergehenden Ansprüche,
wobei die elektrischen Verbraucher ausgewählt sind aus der Gruppe umfassend elektrische Kabinenklimatisierung, elektrische Flügelenteisung, elektrische Gondelenteisung.

6. Energieversorgungssystem nach einem der vorhergehenden Ansprüche,
wobei die elektrische Energieverteilungseinrichtung (2) oder die Brennstoffzellen-Anordnung derart ausgeführt ist, dass durch sie ein Triebwerk oder ein Triebwerksystem des Luftfahrzeugs mit Energie versorgbar ist.

7. Luftfahrzeug, umfassend ein Energieversorgungssystem nach einem der Ansprüche 1 bis 6.

8. Verwendung eines Energieversorgungssystem nach einem der Ansprüche 1 bis 6 in einem Luftfahrzeug.

## Claims

1. An energy supply system on board an aircraft, comprising:
a fuel cell arrangement;
an electrical energy distribution device (2); and
a regulator (5);
wherein the fuel cell arrangement comprises at least one fuel cell module (1);
wherein the fuel cell arrangement is designed to provide electrical energy to the electrical energy distribution device (2);
wherein the electrical energy distribution device (2) is designed to distribute the energy provided to electrical consumers;
wherein the regulator (5) is connected to the electrical energy distribution device (2) via a first signal path;
wherein the regulator is further connected to the at least one fuel cell module via a second signal path;
wherein the electrical energy distribution device (2) is designed for the transmission of signals to the regulator (5);
wherein the regulator (5) is designed to control or regulate the electrical energy distribution device (2) via the first signal path;
wherein the regulator (5) is designed to control or regulate the at least one fuel cell module (1) via the second signal path; and
wherein the aircraft is an aircraft with one starter generator (3) for each engine without further main engine generators.

2. Energy supply system according to claim 1, wherein the regulator (5) comprises a prioritising means;
wherein the prioritising means is designed to provide a ranking list of the electrical consumers; and
wherein the regulator (5) is designed to control or regulate the electrical energy distribution device (2) via the first signal path in such a way that the available energy can be distributed to electrical consumers according to the ranking list of the electrical consumers.

3. Energy supply system according to one of the preceding claims, wherein the starter generator (3) is designed to generate energy; and wherein the starter generator (3) is designed to feed at least part of the energy it generates to the electrical energy distribution device (2).

4. Energy supply system according to one of the preceding claims, wherein the starter generator (3) is integrated on a shaft of a core engine so that there is no need for a device carrier.

5. Energy supply system according to one of the preceding claims, wherein the electrical consumers are selected from the group comprising electrical cabin air conditioning system, electrical wing de-icing system, electrical pod de-icing system.

6. Energy supply system according to one of the preceding claims,
wherein the electrical energy distribution device (2) or the fuel cell arrangement is designed in such a way that it can supply an engine or an engine system of the aircraft with energy.

7. Aircraft comprising an energy supply system according to any one of claims 1 to 6.

8. Use of an energy supply system according to any one of claims 1 to 6 in an aircraft.

## Revendications

1. Système d'alimentation en énergie à bord d'un aéronef, comprenant :
un dispositif de piles à combustible ;
un système de répartition d'énergie électrique (2) ; et
une unité de régulation (5) ;
dans lequel le dispositif de piles à combustible comprend au moins un module de piles à combustible (1) ;
dans lequel le dispositif de piles à combustible est réalisé pour fournir de l'énergie électrique au système de répartition d'énergie électrique (2) ;
dans lequel le système de répartition d'énergie électrique (2) est réalisé pour répartir l'énergie fournie à des consommateurs électriques ;
dans lequel l'unité de régulation (5) est reliée au système de répartition d'énergie électrique (2) par l'intermédiaire d'une première voie de signaux ;
dans lequel l'unité de régulation est par ailleurs reliée avec le au moins un module de piles à combustible par l'intermédiaire d'une deuxième voie de signaux ;
dans lequel le système de répartition d'énergie électrique (2) est réalisé pour transmettre des signaux à l'unité de régulation (5) ;
dans lequel l'unité de régulation (5) est réalisée pour commander ou réguler le dispositif de répartition d'énergie électrique (2) par l'intermédiaire de la première voie pour signaux ;
dans lequel l'unité de régulation (5) est réalisée pour commander ou réguler le au moins un module de piles à combustible (1) par l'intermédiaire de la deuxième voie pour signaux ; et
dans lequel l'aéronef est un aéronef comportant une génératrice de démarrage (3) par moteur sans autres génératrices de moteur principal.

2. Système d'alimentation en énergie selon la revendication 1,
dans lequel l'unité de régulation (5) comporte un moyen de priorisation ;
dans lequel le moyen de priorisation est réalisé pour dresser une liste de classement des consommateurs électriques ; et
dans lequel l'unité de régulation (5) destinée à commander ou à réguler le dispositif de répartition d'énergie électrique (2) par l'intermédiaire de la voie pour signaux est réalisée de telle façon que l'énergie disponible peut être répartie aux consommateurs électriques conformément à la liste de classement des consommateurs électriques.

3. Système d'alimentation en énergie selon l'une des revendications précédentes,
dans lequel la génératrice de démarrage (3) est réalisée pour produire de l'énergie ; et
dans lequel la génératrice de démarrage (3) est réalisée pour céder au moins partiellement son énergie produite au dispositif de répartition d'énergie électrique (2).

4. Système d'alimentation en énergie selon l'une des revendications précédentes,
dans lequel la génératrice de démarrage (3) est intégrée sur un arbre du mécanisme d'entraînement principal, de sorte qu'aucun support d'appareil n'est requis.

5. Système d'alimentation en énergie selon l'une des revendications précédentes,
dans lequel les consommateurs électriques sont choisis parmi le groupe comprenant la climatisation électrique de cabine, le dégivrage électrique d'ailes, le dégivrage électrique de nacelles.

6. Système d'alimentation en énergie selon l'une des revendications précédentes,
dans lequel le dispositif de répartition d'énergie électrique (2) ou le dispositif de piles à combustible est réalisé de telle façon qu'un moteur ou un système de moteurs de l'aéronef peut être alimenté en énergie par leur intermédiaire.

7. Aéronef comprenant un système d'alimentation en énergie selon l'une des revendications 1 à 6.

8. Utilisation d'un système d'alimentation en énergie selon l'une des revendications 1 à 6.
